# EUROPÄISCHE PATENTSCHRIFT

(11) **EP 2 585 746 B1**
(45) Veröffentlichungstag und Bekanntmachung des Hinweises auf die Patenterteilung: **16.08.2017**
(21) Anmeldenummer: 11726129.7
(22) Anmeldetag: 14.06.2011
(51) Int. Cl.: F16K 31/06, B60T 8/36

(54) **ELEKTROMAGNETISCHE VENTILVORRICHTUNG MIT KOPFSEITIG ABGESTÜTZTEM UND BODENSEITIG ENTLASTETEN ANKERFÜHRUNGSROHR**
ELECTROMAGNETIC VALVE DEVICE WITH A SUPPORT WHICH AT THE HEAD PART SUPPORT AND AT THE BOTTOM PART RELEASE AN ARMATURE SUPPORT PIPE
DISPOSITIF DE SOUPAPE ÉLECTROMAGNÉTIQUE AVEC UN SUPPORT QUI À LA TÊTE SUPPORT ET À LA FOND DECHARGE UN CONDUIT DE SUPPORT D'ARMATURE

(30) Priorität: 24.06.2010 DE 102010024943
(43) Veröffentlichungstag der Anmeldung: 01.05.2013
(73) Patentinhaber: KNORR-BREMSE Systeme für Nutzfahrzeuge GmbH, 80809 München (DE)
(72) Erfinder: RÖTHER, Friedbert, 74389 Cleebronn (DE); MÄRKLE, Reiner, 74379 Ingersheim (DE)
(74) Vertreter: Schönmann, Kurt
(86) Internationale Anmeldenummer: PCT/EP2011/059804
(87) Internationale Veröffentlichungsnummer: WO 2011/160980

(56) Entgegenhaltungen:
- WO-A1-01/65159
- AT-B- 382 699
- DE-A1-102007 026 890
- US-A- 6 065 734

## Beschreibung

Die Erfindung betrifft eine elektromagnetische Ventilvorrichtung gemäß dem Oberbegriff von Anspruch 1.

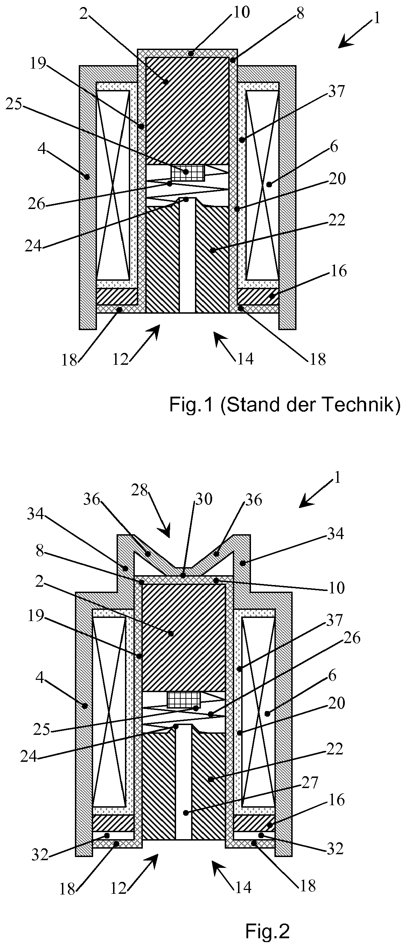

Bei solchen elektromagnetischen Ventilvorrichtungen oder Magnetventilen 1 des Stands der Technik wie sie in Fig.1 gezeigt sind, ist eine mit einem Ankerkörper 2 zusammen wirkenden und in einem Spulengehäuse 4 aufgenommene elektromagnetische Spule 6 vorgesehen. Dabei ist der Ankerkörper 2 in einem stationären hohlzylindrischen Ankerführungsrohr 8 geführt und gegen einen das Ankerführungsrohr 8 kopfseitig verschließenden Kopfteil 10 des Ankerführungsrohrs 8 anschlagbar, welches sich durch eine Durchgangsöffnung 12 des Spulengehäuses 4 sowie eine zentrale Öffnung 14 einer in Bezug zur Spule 6 bodenseitigen Jochscheibe 16 hindurch erstreckt und die Jochscheibe 16 mit einem nach radial außen ragenden ringförmigen Bodenteil 18 kontaktierend untergreift.

Das Ankerführungsrohr 8 ist meist sehr dünnwandig ausgebildet und weist eine Wandstärke von etwa 0,2 bis 0,3 mm auf. Der Ankerkörper 2 wird dabei durch Federmittel gegen das Kopfteil 10 des Ankerführungsrohres 8 vorgespannt und durch Bestromen der Spule 6 in Richtung auf den im Ankerführungsrohr 8 gehaltenen Kern 22 bewegt, um beispielsweise einen mit einem Ventilsitz 24 zusammen wirkendes Dichtelement 25 zu betätigen. Beim Entstromen der Spule 6 wird dann der Ankerkörper 2 infolge der Federkräfte schlagartig gegen den Kopfteil 10 des Ankerführungsrohres 8 geprellt. Dadurch wird einerseits der Kopfteil 10 vor allem sowie auch der Bodenteil 18 jeweils am kantenförmigen Übergang zum zylindrischen Teil 19 des Ankerführungsrohrs 8 stark belastet. Denn auf das sich an der Jochscheibe 16 von unten axial abstützende Bodenteil 18 entstehen dann impulsartig einwirkende Zugkräfte, am Kopfteil 10 dagegen hohe dynamische Druckkräfte, wie anhand von Fig.1 leicht vorstellbar ist.

Folglich kommt es in der Praxis vor, dass das dünnwandige Ankerführungsrohr 8 vor allem im Bereich des Kopfteils 10 und des Bodenteils 18 aufgrund der beim Aufprall hohen dynamischen Axialkräfte einreißt. Ein Riss im Ankerführungsrohr 8 führt dann zu einer unerwünschten Leckage in einem im Magnetventil 1 geführten Druckmittelstrom, welche vor allem bei sicherheitsrelevanten Magnetventilen wie sie beispielsweise in druckmittelbetätigten Fahrzeugbremsanlagen eingesetzt werden, kritisch sind.

Es hat sich in der Praxis herausgestellt, dass das Ankerführungsrohr 8 wegen des oben beschriebenen typischen Schadensbildes das Bauteil darstellt, welches für eine Reduzierung der Lebensdauer des Magnetventils 1 am häufigsten verantwortlich ist.

Eine gattungsgemäße elektromagnetische Ventilanordnung ist aus US 6 065 734 A bekannt. WO 01/65159 A1 offenbart demgegenüber kein separates Ankerführungsrohr, dort ist der Ankerkörper direkt im Spulenkörper geführt. Eine Kavität im Kopf des Spulengehäuses dient zur Aufnahme eines piezoelektrischen Messwertgebers, welcher zur Detektion von Schwingungen vorgesehen ist.

Der Erfindung liegt demzufolge die Aufgabe zugrunde, eine elektromagnetische Ventilvorrichtung der eingangs erwähnten Art derart fortzubilden, dass ihre Zuverlässigkeit und Lebensdauer gesteigert werden.

Diese Aufgabe wird erfindungsgemäß durch die Merkmale von Anspruch 1 gelöst.

### Offenbarung der Erfindung

Der Erfindung geht davon aus, dass zur axialen Abstützung des Kopfteils dieses von einem Stützteil des Spulengehäuses wenigstens teilweise übergriffen ist, welches das Kopfteil des Ankerführungsrohres in einem Kontaktbereich kontaktiert.

Unter "Bodenteil" und "Kopfteil" sollen die Flächen des Ankerführungsrohres verstanden werden, welche senkrecht zu einer axialen Mittelachse des Magnetventils angeordnet sind. Diese Flächenanteile können dabei einstückig mit dem zylindrischen Teil des Ankerführungsrohres hergestellt oder auch als zunächst separate Teile stoffschlüssig mit diesem verbunden sein.

Beispielsweise wird der Ankerkörper durch sich einerseits an einer vom Bodenteil des Ankerführungsrohres weg weisenden Stirnfläche des Ankerkörpers und andererseits an einer gegenüberliegenden Stirnfläche eines in dem Ankerführungsrohr gehaltenen Kerns abstützende Federmittel gegen das Kopfteil des Ankerführungsrohres vorgespannt und ist durch Bestromen der wenigstens einen elektromagnetischen Spule zum Kern hin bewegbar.

Dann wird das Kopfteil des Ankerführungsrohres am Spulengehäuse abgestützt, wobei insbesondere die auf das Kopfteil wirkenden Axialdruckkräfte z.B. aufgrund des Aufpralls des Ankers können in das Spulengehäuse abgeleitet werden. Im Kopfbereich des Magnetventils sind dann zwei sich wenigstens teilweise kontaktierende Wandungen vorhanden, nämlich einerseits die Wandung des Kopfteils des Ankerführungsrohres und andererseits die Wandung des dieses abstützenden Stützteils.

Erfindungsgemäß weist das Stützteil des Spulengehäuses im Längsquerschnitt gesehen einen M-förmigen Querschnitt auf, mit einem zylindrischen Teil, von welchem sich ein schräg und zum zentralen Kontaktbereich hin verlaufender Stegteil nach radial innen erstreckt. Dadurch werden die auf das Kopfteil wirkenden Axialkräfte zunächst auf die zentrale beispielsweise kreisscheibenförmige Kontaktfläche übertragen und über den Stegteil und den zylindrischen Teil in axialer Richtung in das Spulengehäuse eingeleitet.

Insgesamt ergeben sich durch die beschriebenen baulichen Maßnahmen eine verringerte Belastung des Ankerführungsrohres und damit eine geringere Tendenz, dass sich in diesem Bauteil Risse ausbilden können. Daher steigt die Lebensdauer und Zuverlässigkeit von mit einem solchermaßen ausgestalteten Ankerführungsrohr ausgerüsteten Magnetventilen.

Durch die in den Unteransprüchen aufgeführten Maßnahmen sind vorteilhafte Weiterbildungen und Verbesserungen der in Anspruch 1 angegebenen Erfindung möglich.

Besonders bevorzugt ist das Bodenteil des Ankerführungsrohres von der Jochscheibe durch einen Leerraum axial beabstandet. Dies bringt den Vorteil mit sich, dass das Bodenteil des Ankerführungsrohres sich aufgrund der axialen Beabstandung und des dazwischen vorhandenen Leerraumes nun nicht mehr an der Jochscheibe abstützen kann. "Leerraum" bedeutet in diesem Zusammenhang, dass keine Strukturen oder Bauteile zwischen der zum Bodenteil weisenden Stirnfläche der Jochscheibe und dem Bodenteil vorhanden sind, durch welche eine Übertragung von Axialkräften zwischen dem Bodenteil und der Jochscheibe stattfinden könnte.

Durch die beschriebenen baulichen Maßnahmen ergibt sich eine weiter verringerte Belastung des Ankerführungsrohres und damit eine geringere Tendenz, dass sich in diesem Bauteil Risse ausbilden können. Daher steigt die Lebensdauer und Zuverlässigkeit von mit einem solchermaßen ausgestalteten Ankerführungsrohr ausgerüsteten Magnetventilen.

Weiterhin besonders bevorzugt bildet der Kontaktbereich zwischen dem das Kopfteil des Ankerführungsrohres und dem Stützteil des Spulengehäuses eine zentrale Kreisfläche aus.

Gemäß einer Weiterbildung überdeckt oder deckelt das Stützteil des Spulengehäuses das Kopfteil vollständig. Mit anderen Worten ist aus Stützteil dann in der Draufsicht kreisflächig umlaufend ausgebildet. Alternativ könnte das Stützteil des Spulengehäuses etwa als streifenförmiger Steg ausgebildet sein und das Kopfteil diametral überspannen.

Weitere die Erfindung verbessernde Maßnahmen werden nachstehend gemeinsam mit der Beschreibung eines Ausführungsbeispiels der Erfindung anhand der Zeichnung näher dargestellt.

### Zeichnung

In der ein Ausführungsbeispiel der Erfindung darstellenden Zeichnung zeigt Fig.2 einen schematischen Querschnitt dieser Ausführungsform einer elektromagnetischen Ventilvorrichtung.

### Beschreibung des Ausführungsbeispiels

Das in Fig.2 gezeigte Ausführungsbeispiel eines Magnetventils 1 für eine elektro-pneumatische Bremseinrichtung eines Nutzfahrzeugs weist einen Ankerkörper 2 auf, welcher mit einer in einem Spulengehäuse 4 aufgenommenen elektromagnetischen Spule 6 zusammen wirkt. Der Ankerkörper 2 ist in einem stationären hohlzylindrischen Ankerführungsrohr 8 axial geführt und gegen einen das Ankerführungsrohr 8 kopfseitig verschließenden Kopfteil 10 des Ankerführungsrohrs 8 anschlagbar. Das Ankerführungsrohr 8 ist beispielsweise als Tiefziehteil ausgeführt.

Das Ankerführungsrohr 8 erstreckt sich mit seinem zylindrischen Teil 19 durch eine axiale zentrale Durchgangsöffnung 12 eines im Spulengehäuse 4 gehaltenen Spulenkörpers 37 sowie durch eine zentrale Öffnung 14 einer Jochscheibe 16 hindurch, die das als Hohlzylinder mit kreisscheibenförmigem Querschnitt ausgeführte Spulengehäuse 4 bodenseitig verschließt. Die Jochscheibe 16 wird dabei mit einem nach radial außen ragenden, ringförmigen Bodenteil 18 des Ankerführungsrohres 8 wenigstens teilweise untergriffen, jedoch ohne Kontakt.

Das Ankerführungsrohr 8 ist beispielsweise an der radial inneren Umfangswand eines radial inneren zylindrischen Abschnitts 20 des Spulenkörpers 37 gehalten, auf welchen die Spule 6 gewickelt ist und welcher die zentrale Durchgangsöffnung 12 ausbildet.

Kopfseitig ist das Ankerführungsrohr 8 durch das Kopfteil 10 verschlossen und bodenseitig offen. Weiterhin ist an einem bodenseitig in dem Ankerführungsrohr 8 gehaltenen Kern 22 kopfseitig ein Ventilsitz 24 ausgebildet, welcher mit einem am Ankerkörper 2 bodenseitig gehaltenen Dichtelement 25 abhängig von einer Be- oder Entstromung der Spule 6 zusammenwirkt. Das Spulengehäuse 4 weist weiterhin einen hier nicht sichtbaren zur elektrischen Kontaktierung der Spule 6 vorgesehenen Steckeranschluss auf.

Der Ankerkörper 2 wird durch eine sich einerseits an einer vom Bodenteil 18 des Ankerführungsrohres 8 weg weisenden Stirnfläche des Ankerkörpers 2 und andererseits an einer gegenüberliegenden Stirnfläche des in dem Ankerführungsrohr 8 gehaltenen Kerns 22 abstützende Druckfeder 26 gegen das geschlossene Kopfteil 10 des Ankerführungsrohres 8 vorgespannt und ist durch Bestromen der elektromagnetischen Spule 6 zum Kern 22 hin bewegbar, wodurch das Dichtelement 25 gegen den Ventilsitz 24 dichtet. Bei einer Entstromung der Spule 6 wird der Ankerkörper 2 dagegen durch die Federkräfte der Druckfeder 26 in Richtung auf das Kopfteil 10 des Ankerführungsrohres 8 gedrängt, wodurch das Dichtelement 25 vom Ventilsitz 24 abhebt und ein zentral im Kern ausgebildeter Strömungskanal 27 freigegeben wird.

Der Ankerkörper 2, das Spulengehäuse 4, die Jochscheibe 16 sowie der Kern 22 sind aus einem ferromagnetischen Material gefertigt. Die Jochscheibe 16 dient in bekannter Weise zur Ausbildung eines magnetischen Rückflusses des die Spule 6, den Ankerkörper 2, das Spulengehäuse 4 und den Kern 22 durchdringenden Magnetfelds, wenn die Spule 6 bestromt wird. Genauer wirkt der Ankerkörper 2 in bekannter elektromagnetischer Weise zum Schließen eines magnetischen Kreises zusammen mit der Jochscheibe 16 und dem Kern 22, so dass bei Bestromung der Spule 6 der Ankerkörper 2 in Axialrichtung (Vertikalrichtung in Fig.2) bewegt wird, um das Magnetventil 1 zu öffnen oder zu schließen.

Zur axialen Abstützung des Kopfteils 10 ist dieses von einem Stützteil 28 des Spulengehäuses 4 diametral überspannt oder übergriffen, welches das Kopfteil 10 des Ankerführungsrohres 8 in einem Kontaktbereich 30 kontaktiert. Weiterhin ist das Bodenteil 18 des Ankerführungsrohres 8 von der Jochscheibe 16, genauer von deren bodenseitiger Stirnfläche durch einen Leerraum 32 axial beabstandet.

Besonders bevorzugt bildet der Kontaktbereich 30 zwischen dem Kopfteil 10 des Ankerführungsrohres 8 und dem Stützteil 28 des Spulengehäuses 4 eine zentrale Kreisscheibenfläche aus, wobei das Stützteil 28 des Spulengehäuses 4 im Längsquerschnitt gesehen beispielsweise einen M-förmigen Querschnitt aufweist, wie aus Fig.2 hervorgeht.

Das Stützteil 28 hat dann einen zylindrischen Teil 34, von welchem sich ein schräg zum zentralen Kontaktbereich 30 hin verlaufender Stegteil 36 nach radial innen erstreckt. Im zentralen Bereich des Stegteils 36 befindet sich dann der kreisscheibenförmige Kontaktbereich 30 mit dem Kopfteil 10. Die Abschnitte 28, 34, 36 sowie der Rest des Spulengehäuses 4 sind beispielsweise einstückig ausgebildet, insbesondere als Tiefziehteil aus ferromagnetischem Material.

Dadurch werden die auf das Kopfteil 10 wirkenden Axialkräfte zunächst auf den zentralen kreisscheibenförmigen Kontaktbereich 30 übertragen und über den Stegteil 36 als reine Zugkräfte auf den in axialer Richtung verlaufenden zylindrischen Teil 34 übertragen und von dort in das restliche Spulengehäuse 4 eingeleitet.

Das Stützteil 28 des Spulengehäuses 4 überdeckt oder deckelt das Kopfteil 10 bevorzugt vollständig. Mit anderen Worten ist aus Stützteil 28 dann in der Draufsicht kreisflächig umlaufend ausgebildet. Alternativ könnte das Stützteil 28 auch durch einen streifenförmigen Steg gebildet werden, welcher das Kopfteil 10 zwar diametral vollständig überbrückt, aber dessen Oberfläche nur teilweise überdeckt.

Die auf das Ankerführungsrohr 8 wirkenden statischen und dynamischen Kräfte (aufgrund einer Betätigung des Magnetventils 1) werden daher über die Verbindung zwischen dem Ankerführungsrohr 8 und dem inneren zylindrischen Abschnitt 20 des Spulengehäuses 4 einerseits und der radial inneren Umfangsfläche der Jochscheibe 16 andererseits sowie das kopfseitige Stützteil 28 in das Spulengehäuse 4 abgeleitet.

### Bezugszeichenliste

- 1: Magnetventil
- 2: Ankerkörper
- 4: Spulengehäuse
- 6: Spule
- 8: Ankerführungsrohr
- 10: Kopfteil
- 12: Durchgangsöffnung
- 14: Öffnung
- 16: Jochscheibe
- 18: Bodenteil
- 19: zylindrischer Teil
- 20: Abschnitt
- 22: Kern
- 24: Ventilsitz
- 25: Dichtelement
- 26: Druckfeder
- 27: Strömungskanal
- 28: Stützteil
- 30: Kontaktbereich
- 32: Leerraum
- 34: zylindrischer Teil
- 36: Stegteil
- 37: Spulenkörper

## Patentansprüche

1. Elektromagnetische Ventilvorrichtung (1) mit wenigstens einer mit einem Ankerkörper (2) zusammen wirkenden und in einem Spulengehäuse (4) aufgenommenen elektromagnetischen Spule (6), wobei der Ankerkörper (2) in einem separaten stationären hohlzylindrischen Ankerführungsrohr (8) geführt und gegen einen das Ankerführungsrohr (8) kopfseitig verschließenden Kopfteil (10) des Ankerführungsrohrs (8) anschlagbar ist, welches sich durch eine Durchgangsöffnung (12) des Spulengehäuses (4) sowie eine zentrale Öffnung (14) einer in Bezug zur Spule (6) bodenseitigen Jochscheibe (16) hindurch erstreckt und die Jochscheibe (16) mit einem nach radial außen ragenden ringförmigen Bodenteil (18) wenigstens teilweise untergreift, wobei zur axialen Abstützung des Kopfteils (10) dieses von einem Stützteil (28) des Spulengehäuses (4) wenigstens teilweise übergriffen ist, wobei das Stützteil (28) das Kopfteil (10) in einem Kontaktbereich (30) kontaktiert, **dadurch gekennzeichnet, dass** das Stützteil (28) des Spulengehäuses (4) im Längsquerschnitt gesehen einen M-förmigen Querschnitt aufweist, mit einem zylindrischen Teil (34), von welchem sich ein schräg und zum zentralen Kontaktbereich (30) hin verlaufender Stegteil (36) nach radial innen erstreckt.

2. Ventilvorrichtung nach Anspruch 1, **dadurch gekennzeichnet, dass** das Bodenteil (18) des Ankerführungsrohres (8) von der Jochscheibe (16) durch einen Leerraum (32) axial beabstandet ist.

3. Ventilvorrichtung nach Anspruch 1 oder 2, **dadurch gekennzeichnet, dass** der Kontaktbereich (30) zwischen dem das Kopfteil (10) des Ankerführungsrohres (8) und dem Stützteil (28) des Spulengehäuses (4) eine zentrale Kreisscheibenfläche ausbildet.

4. Ventilvorrichtung nach einem der vorhergehenden Ansprüche, **dadurch gekennzeichnet, dass** der Ankerkörper (2) durch sich einerseits an einer vom Bodenteil (18) des Ankerführungsrohres (8) weg weisenden Stirnfläche des Ankerkörpers (2) und andererseits an einer gegenüberliegenden Stirnfläche eines in dem Ankerführungsrohr (8) gehaltenen Kerns (22) abstützende Federmittel (26) gegen das Kopfteil (10) des Ankerführungsrohres (8) vorgespannt und durch Bestromen der wenigstens einen elektromagnetischen Spule (6) zum Kern (22) hin bewegbar ist.

5. Ventilvorrichtung nach einem der vorhergehenden Ansprüche, **dadurch gekennzeichnet, dass** die Jochscheibe (16) zur Ausbildung eines magnetischen Rückflusses vorgesehen ist.

6. Ventilvorrichtung nach einem der vorhergehenden Ansprüche, **dadurch gekennzeichnet, dass** das Stützteil (28) des Spulengehäuses (4) das Kopfteil (10) vollständig überdeckt.

7. Ventilvorrichtung nach einem der Ansprüche 1 bis 5, **dadurch gekennzeichnet, dass** das Stützteil (28) des Spulengehäuses (4) als streifenförmiger Steg ausgebildet ist und das Kopfteil diametral überspannt.

## Claims

1. Electromagnetic valve device (1) having at least one electromagnetic coil (6) which interacts with an armature body (2) and which is accommodated in a coil housing (4), wherein the armature body (2) is guided in a separate static, hollow cylindrical armature guide tube (8) and can abut against a head part (10), which closes off the armature guide tube (8) at the head side, of the armature guide tube (8) which extends through a central passage opening (12) of the coil housing (4) and through a central opening (14) in a yoke disk (16) at the base side in relation to the coil (6) and which at least partially engages under the yoke disk (16) by means of a radially outwardly projecting annular base part (18), wherein, for the axial support of the head part (10), said head part is at least partially engaged over by a support part (28) of the coil housing (4), wherein the support part (28) makes contact with the head part (10) in a contact region (30), **characterized in that** the support part (28) of the coil housing (4) has an M-shaped cross section as viewed in longitudinal cross section, having a cylindrical part (34) from which a web part (36) which runs obliquely and toward the central contact region (30) extends radially inward.

2. Valve device according to Claim 1, **characterized in that** the base part (18) of the armature guide tube (8) is spaced apart axially from the yoke disk (16) by an empty chamber (32).

3. Valve device according to Claim 1 or 2, **characterized in that** the contact region (30) between the head part (10) of the armature guide tube (8) and the support part (28) of the coil housing (4) forms a central circular-disk-shaped area.

4. Valve device according to one of the preceding claims, **characterized in that** the armature body (2) is preloaded against the head part (10) of the armature guide tube (8) by spring means (26) which are supported at one side against an end surface, which points away from the base part (18) of the armature guide tube (8), of the armature body (2) and at the other side against an opposite end surface of a core (22) which is held in the armature guide tube (8), and said armature body can be moved toward the core (22) by the energization of the at least one electromagnetic coil (6).

5. Valve device according to one of the preceding claims, **characterized in that** the yoke disk (16) is provided so as to form a magnetic return path.

6. Valve device according to one of the preceding claims, **characterized in that** the support part (28) of the coil housing (4) completely covers the head part (10).

7. Valve device according to one of Claims 1 to 5, **characterized in that** the support part (28) of the coil housing (4) is in the form of a strip-like web and spans the head part diametrically.

## Revendications

1. Dispositif (1) de soupape électromagnétique comprenant au moins une bobine (6) électromagnétique coopérant avec une armature (2) et reçue dans un boîtier (4) de bobine, l'armature (2) étant guidée dans un tube (8) de guidage d'armature cylindrique creux, fixe et distinct et pouvant venir buter sur une partie (10) de tête, se fermant du côté de la tête du tube (8) de guidage d'armature, du tube (8) de guidage d'armature et passant dans une ouverture (12) de passage du boîtier (4) de la bobine ainsi que dans une ouverture (14) centrale d'un disque (16) de culasse du côté du fond par rapport à la bobine (16) et le disque (16) de culasse se prenant par en dessous, au moins en partie, avec une partie (18) de fond annulaire dépassant à l'extérieur radialement, dans lequel, pour l'appui axial de la partie (10) de tête, celle-ci est prise par en dessus au moins en partie par une partie (28) d'appui du boîtier (4) de la bobine, la partie (28) d'appui étant en contact avec la partie (10) de tête dans une région (30) de contact , **caractérisé en ce que** la partie (28) d'appui du boîtier (4) de la bobine a, considéré dans la section transversale longitudinale, une section transversale en forme de M ayant une partie (34) cylindrique de laquelle s'étend vers l'intérieur radialement une partie (36) d'entretoise s'étendant de manière inclinée et vers la région (30) centrale de contact.

2. Dispositif de soupape suivant la revendication 1, **caractérisé en ce que** la partie (18) de fond du tube (8) de guidage de l'armature est à distance axialement du disque (16) de culasse par un espace (32) vide.

3. Dispositif de soupape suivant la revendication 1 ou 2, **caractérisé en ce que** la région (30) de contact forme une surface centrale en forme de disque circulaire entre la partie (10) de tête du tube (8) de guidage de l'armature et la partie (28) d'appui du boîtier (4) de la bobine.

4. Dispositif de soupape suivant l'une des revendications précédentes, **caractérisé en ce que** l'armature (2) est précontrainte sur la partie (10) de tête du tube (8) de guidage de l'armature par un moyen (26) de ressort s'appuyant d'une part sur une surface frontale, éloignée de la partie (18) de fond du tube (8) de guidage de l'armature (2), et d'autre part sur une surface frontale opposée d'un noyau (22) maintenu dans le tube (8) de guidage de l'armature et peut se déplacer vers le noyau (22) par alimentation en courant électrique de la au moins une bobine (6) électromagnétique.

5. Dispositif de soupape suivant l'une des revendications précédentes, **caractérisé en ce que** le disque (16) de culasse est prévu pour la formation d'un reflux magnétique.

6. Dispositif de soupape suivant l'une des revendications précédentes, **caractérisé en ce que** la pièce (28) d'appui du boîtier (4) de la bobine recouvre complètement la partie (10) de tête.

7. Dispositif de soupape suivant l'une des revendications 1 à 5, **caractérisé en ce que** la partie (28) d'appui du boîtier (4) de la bobine est constituée sous la forme d'une entretoise en forme de bande et enjambe diamétralement la partie de tête.
